# EUROPÄISCHE PATENTANMELDUNG

(11) **EP 0 936 392 A2**
(43) Veröffentlichungstag der Anmeldung: **18.08.1999**
(21) Anmeldenummer: 99103002.4
(22) Anmeldetag: 15.02.1999
(51) Int. Cl.: F16L 27/11, F16L 51/02, B21D 15/06

(54) **Metallbalg und Metallbalg-Herstellungsverfahren**

(30) Priorität: 16.02.1998 DE 19806304
(71) Anmelder: von Felten, Paul, 5644 Auw-Rüstenschwil (CH)
(72) Erfinder: Eismann, Ralph, 8006 Zürich (CH)
(74) Vertreter: Manitz, Finsterwald & Partner

(57) **Zusammenfassung**

Verfahren zur Herstellung eines zur Verbindung mit einem Gegenstück (16) geeigneten Metallbalgs, bei dem ein rohrförmiger Rohling durch Kraftbeaufschlagung zu einem Balg mit mehreren alternierend aufeinanderfolgenden ringförmigen Aus- und Einbuchtungen (6,7) deformiert wird, bei dem zumindest ein zur Verbindung mit dem Gegenstück (16) dienendes Ringelement (4,5) relativ zum Rohling derart angeordnet wird, daß es diesen umgibt, und daß anschließend die Deformation des Rohlings zum Balg derart erfolgt, daß das Ringelement (4,5) in einer ringförmigen Einbuchtung (6,7) zwischen zwei benachbarten Ausbuchtungen (8,9) zu liegen kommt.

## Beschreibung

Die Erfindung betrifft ein Verfahren zur Herstellung eines zur Verbindung mit einem Gegenstück geeigneten Metallbalgs, bei dem ein rohrförmiger Rohling durch Kraftbeaufschlagung zu einem Balg mit mehreren alternierend aufeinanderfolgenden ringförmigen Aus- und Einbuchtungen deformiert wird, sowie einen nach einem solchen Verfahren hergestellten Metallbalg.

Metallbälge der angegebenen Art dienen bei Rohrleitungen zur Kompensation von Wärmedehnungen, zur Schalldämpfung, zur Isolation von Rohrvibrationen und zum Ausgleich von Montagetoleranzen. Zu diesen Zwekken werden die Metallbälge üblicherweise mit ihren Stirnseiten mit jeweils einer Rohrleitung verbunden. Durch die Dehn- bzw. Stauchbarkeit der Metallbälge können dann Relativbewegungen der Rohrleitungen zueinander oder unterschiedliche Abstände dieser Rohrleitungen voneinander ausgeglichen werden.

Typische Anwendungsbereiche für die Verbindung von Rohrleitungen mittels Metallbälgen sind z. B. die Vakuumtechnik, thermische Solaranlagen zur Brauchwassererwärmung und zur Prozeßwärmeerzeugung, Heizungs- und Warmwasseranlagen, verfahrenstechnische Anlagen, Fernwärmeleitungen, Pipelines und energietechnische Anlagen.

Um einen Metallbalg mit einer Rohrleitung verbinden zu können, ist es bekannt, ein Ringelement auf einen zylindrischen Endbereich eines Metallbalgs aufzuschieben und den Metallbalg dann in seinen zylindrischen Endbereich zu bördeln. Durch das gebördelte Ende des Metallbalgs wird dann verhindert, daß das Ringelement vom zylindrische Ende des Metallbalgs wieder abgezogen werden kann. Das auf die genannte Weise am Metallbalg fixierte Ringelement kann dann mit einem geeigneten Gegenstück, beispielsweise einem an der Rohrleitung angebrachten Gegenflansch durch Schrauben oder Klemmvorrichtungen verbunden werden.

Nachteilig an dem beschriebenen Verfahren zur Verbindung von Metallbälgen mit Rohrleitungen ist die Tatsache, daß im Anschluß an die Herstellung des Metallbalgs noch der Verfahrensschritt des Bördelns ausgeführt werden muß, um das Ringelement am Metallbalg zu fixieren. Dieser Verfahrensschritt des Bördelns ist mit wirtschaftlichem Aufwand verbunden, was den Herstellungsprozeß insgesamt auf unerwünschte Weise verteuert.

Eine Aufgabe der Erfindung besteht darin, ein Verfahren zur Verbindung eines Metallbalgs mit einem Gegenstück zu schaffen, welches mit verringertem Aufwand und insbesondere unter Einsparung des Verfahrensschritts des Bördelns durchgeführt werden kann.

Diese Aufgabe wird erfindungsgemäß dadurch gelöst, daß zumindest ein zur Verbindung mit dem Gegenstück dienendes Ringelement relativ zum Rohling derart angeordnet wird, daß es diesen umgibt, und daß anschließend die Deformation des Rohlings zum Balg derart erfolgt, daß das Ringelement in einer ringförmigen Einbuchtung zwischen zwei benachbarten Ausbuchtungen zu liegen kommt.

Erfindungsgemäß wird also das Ringelement bereits vor Herstellung des Metallbalgs auf den Rohling aufgeschoben, woraufhin dann der den Balg erzeugende Deformationsprozeß beginnt. Das Ringelement wird während des Deformationsprozesses so positioniert, daß es letztlich, nach vollendeter Herstellung des Balgs, zwischen zwei benachbarten Ausbuchtungen zu liegen kommt und durch diese beiden Ausbuchtungen zumindest innerhalb bestimmter Grenzen fixiert ist. Die Fixierung des Ringelements wird dadurch sichergestellt, daß der Innendurchmesser des Ringelements kleiner ist als der Außendurchmesser des Balgs im Bereich einer Ausbuchtung. Durch diese Abmessungen wird gewährleistet, daß sich das Ringelement nicht über eine Ausbuchtung des Balgs hinweg bewegen kann.

Durch die erfindungsgemäße Einsparung des Bördelns wird erreicht, daß ein Metallbalg mit einem an ihm fixierten Ringelement in einem einzigen Verfahrensschritt, nämlich durch die Deformation des Rohlings zum Balg hergestellt werden kann, was erhebliche wirtschaftliche Vorteile mit sich bringt.

Bevorzugte Ausführungsformen des erfindungsgemäßen Verfahrens sind in den Unteransprüchen 1 bis 14 beschrieben.

Bevorzugte Ausführungsformen eines erfindungsgemäßen Metallbalgs gemäß Anspruch 15 sind in den Ansprüchen 16 und 17 beschrieben.

Die Erfindung wird nachfolgend anhand von Ausführungsbeispielen unter Bezugnahme auf die Zeichnungen beschrieben; in diesen zeigen:
- Fig. 1: einen Rohling mit zwei aufgeschobenen Ringelementen,
- Fig. 2: eine nach einer ersten Variante des erfindungsgemäßen Verfahrens hergestellte Metallbalg-Rohrverbindung,
- Fig. 3: eine nach der zweiten Variante des erfindungsgemäßen Verfahrens hergestellte Metallbalg-Rohrverbindung, und
- Fig. 4: eine nach der dritten Variante des erfindungsgemäßen Verfahrens hergestellte Metallbalg-Rohrverbindung.

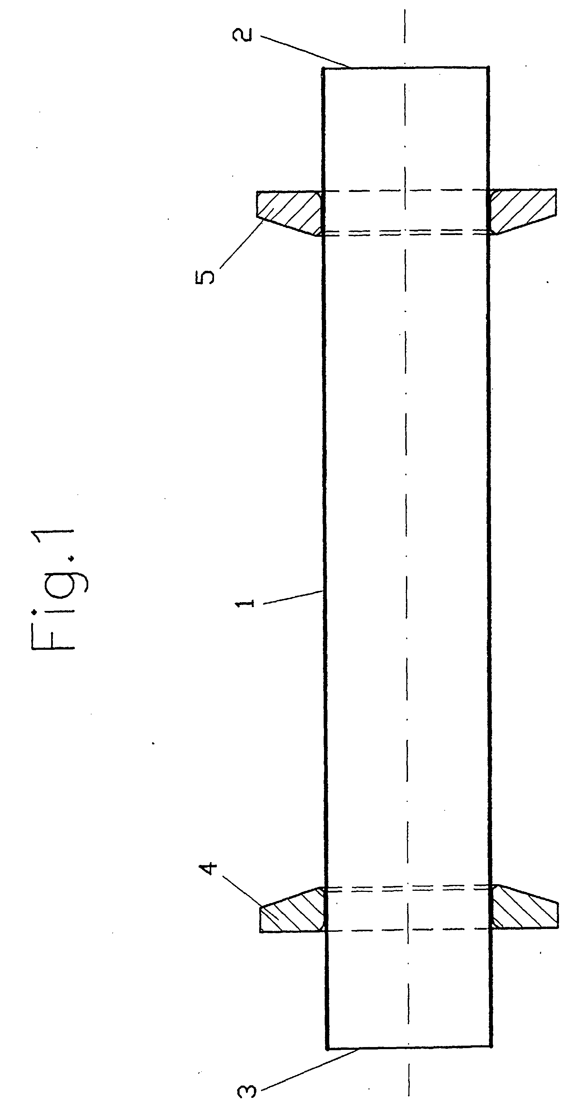

Fig. 1 zeigt einen Rohling 1, welcher die Form eines zylindrischen Rohrs aufweist. Alternativ kann der Rohling 1 umlaufende Sicken aufweisen, die im Bereich der auszuformenden Einbuchtungen liegen, um auf diese Weise bei der nachfolgenden Deformation größere Durchmesserdifferenzen zwischen Ein- und Ausbuchtungen erzeugen zu können.

Über die beiden stirnseitigen Endbereiche 2, 3 des Rohlings 1 ist jeweils ein Ringelement 4, 5 geschoben. Beide Ringelemente 4, 5 weisen jeweils den gleichen Abstand zum zugeordneten stirnseitigen Ende 3, 2 des Rohlings 1 auf. Der Innendurchmesser der Ringelemente 4, 5 entspricht im wesentlichen dem Außendurchmesser des Rohlings 1, ist jedoch so groß, daß die Ringelemente 4, 5 ohne großen Kraftaufwand auf den Rohling 1 aufgeschoben werden können.

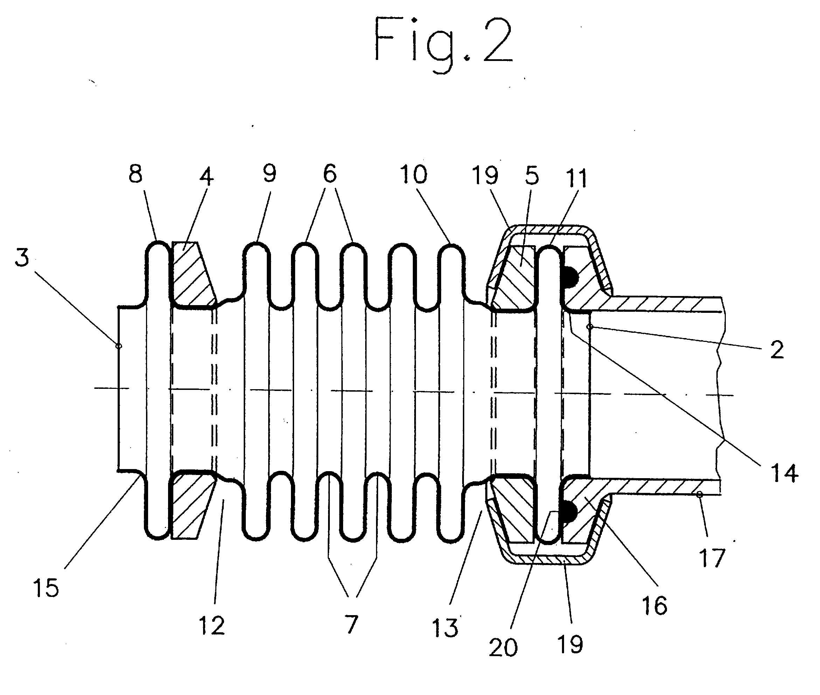

Der Rohling 1 mit den Ringelementen 4, 5 wird anschließend in eine geeignete Form eingebracht, in der die Deformation des Rohlings 1 zum Balg erfolgt. Der genannte Deformationsprozeß kann dadurch erfolgen, daß im Inneren des Rohlings 1 radial nach außen gerichtete Druckkräfte erzeugt werden, denen zumindest im Bereich der auszuformenden Balgeinbuchtungen radial nach innen gerichtete, durch die genannte Form bewirkte Stützkräfte entgegenwirken. Durch die Deformation des Rohlings 1 zum Balg erfolgt naturgemäß eine Verkürzung des Rohlings 1 bzw. des Balgs, da für die Ausformung der Balg-Ausbuchtungen die Wand des Rohlings 1 in den entsprechenden Bereichen nach außen gedrückt werden muß, was dann zwangsläufig ein axiales Zusammenziehen bzw. eine Verkürzung des Rohlings 1 bewirkt. Diese Verkürzung ist an den in den Fig. 2 bis 4 dargestellten Metallbälgen erkennbar. Um beim Deformationsvorgang der genannten Verkürzung Rechnung zu tragen, muß die Form, welche die radial nach innen gerichteten Stützkräfte bewirkt, sich ebenfalls verkürzen bzw. zusammenziehen. Solche Formen sind aus dem Stand der Technik bekannt.

Beim Deformationsvorgang des Rohlings 1 zum Balg bewirkten nicht nur die genannte Form, sondern ebenfalls die beiden Ringelemente 4, 5 radial nach innen gerichtete Stützkräfte. Dies bedeutet, daß sich der Rohling während des Deformationsprozesses im Bereich der Ringelemente 4, 5 nur soweit ausdehnen kann, bis er am Innenumfang der Ringelemente 4, 5 anliegt.

Um den Deformationsvorgang ausführen zu können, werden entweder zuerst die Ringelemente 4, 5 über den Rohling 1 geschoben und anschließend der Rohling 1 mit den Ringelementen 4, 5 in die - in Fig. 1 nicht dargestellte - Form eingelegt. Ebenso ist es jedoch auch möglich, zuerst die Ringelemente 4, 5 in die Form einzulegen und anschließend den Rohling 1 durch die Ringelemente 4, 5 hindurch in die Form einzuschieben.

Fig. 2 zeigt einen erfindungsgemäß hergestellten Metallbalg mit mehreren alternierend aufeinanderfolgenden ringförmigen Ausbuchtungen 6 und Einbuchtungen 7. Aus Fig. 2 ist ersichtlich, daß die Ringelemente 4, 5 gemäß Fig. 1 derart am Rohling 1 positioniert wurden, daß nach Deformation des Rohlings zum Balg die Ringelemente 4, 5 jeweils zwischen zwei Ausbuchtungen 8, 9 bzw. 10, 11 in einer zwischen diesen Ausbuchtungen 8, 9 bzw. 10, 11 angeordneten Einbuchtung 12 bzw. 13 zu liegen kommen. Die Ringelemente 4, 5 sind somit durch die Ausbuchtungen 8, 9 bzw. 10, 11 in ihrer Lage zumindest soweit fixiert, daß sie nicht über die genannten Ausbuchtungen hinweg geschoben werden können.

Die dem stirnseitigen Balgende 2 zugewandte und an das Ringelement 5 angrenzende Ausbuchtung 11 stellt die letzte Ausbuchtung des Balgs in Richtung des genannten Balgendes 2 dar. Entsprechend verhält es sich mit der dem gegenüberliegenden Balgende 3 zugeordneten Ausbuchtung 8.

Die jeweils letzte Ausbuchtung 11 bzw. 8 in Richtung des stirnseitigen Balgendes 2 bzw. 3 stellt jeweils eine vollständige Welle dar, was bedeutet, daß sie in Richtung des jeweiligen Balgendes 2, 3 in einen Bereich einer Einbuchtung 14 bzw. 15 übergeht.
Es sind jedoch auch beliebige andere Ausformungen der letzten Ausbuchtung 11 realisierbar. Insbesondere ist es möglich, daß die letzte Ausbuchtung eine andere Form aufweist als die zwischen den Ringelementen gelegenen Ausbuchtungen. Zum Beispiel kann der Außendurchmesser der letzten Ausbuchtung größer oder kleiner sein als der Außendurchmesser der zwischen den Ringelementen gelegenen Ausbuchtungen, die letzte Ausbuchtung kann insbesondere über eine Einbuchtung in einen zylindrischen Balgabschluß übergehen oder sie kann mit einer im wesentlichen radial verlaufenden Wand der Ausbuchtung enden.

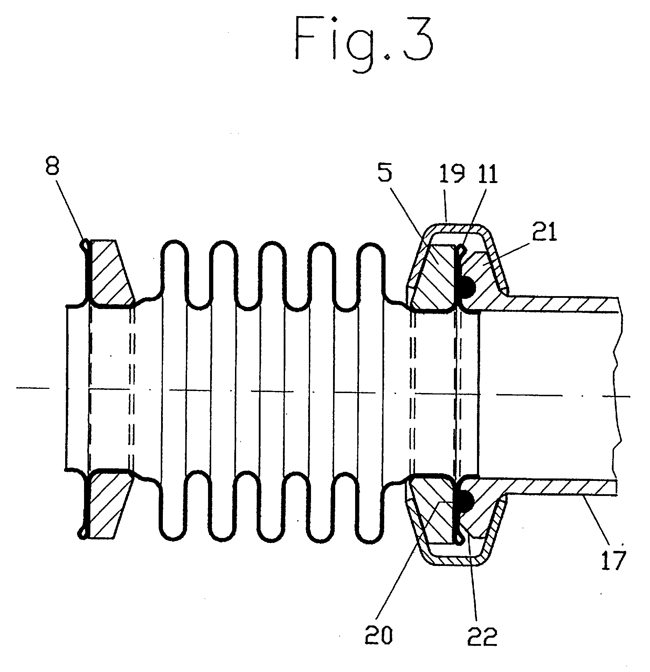

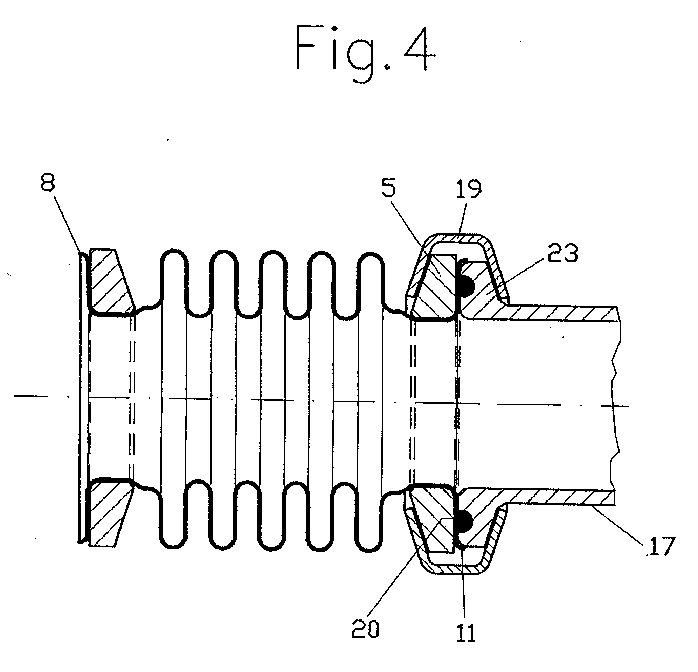

Die Kopplung eines Balgs gemäß Fig. 2 mit einem Gegenstück 16 ist exemplarisch im Bereich des Balgendes 2 dargestellt. Eine entsprechende Kopplung ist im Bereich des gegenüberliegenden Balgendes 3 vorgesehen. Diese Kopplung ist - ebenso wie bei den Fig. 3 und 4 - aus Gründen der Übersichtlichkeit jedoch nicht dargestellt.

Das Gegenstück 16 besteht aus einem Ringelement, dessen Innendurchmesser demjenigen der Ringelemente 4, 5 entspricht und das mit einem Gehäuse oder Rohrstück 17 verbunden ist.

Die in Richtung des Balgendes 2 letzte Ausbuchtung 11 ist zwischen dern Ringelement 5 und dem Gegenstück 16 angeordnet, wobei Ringelement 5 und Gegenstück 16 durch ein Klammerelement 19 in Richtung aufeinander zu gezogen werden, so daß letztlich die Ausbuchtung 11 zwischen dem Ringelement 5 und dem Gegenstück 16 eingeklemmt ist.

Bevorzugt ist es, wenn das Gegenstück 16 mit einem umlaufenden, ringförmigen Dichtungsmittel 20 versehen ist, welches an der Ausbuchtung 11 anliegt. Durch dieses Dichtungsmittel 20 wird eine dichte Verbindung zwischen Metallbalg und Rohrstück 17 hergestellt.

Fig. 3 zeigt ein zu Fig. 2 alternatives Verfahren zur Herstellung einer Verbindung zwischen einem Metallbalg und einem Rohrstück. Diejenigen Teile der Fig. 3, welche eine Entsprechung in der Fig. 2 finden, sind jeweils mit den gleichen Bezugszeichen gekennzeichnet.

Der Metallbalg gemäß Fig. 3 wird auf exakt die gleiche Weise hergestellt wie der Metallbalg gemäß Fig. 2. Ein Unterschied besteht dann lediglich im Vorgang des Verbindens des Metallbalgs mit dem Rohrstück 17. Dabei werden nämlich Ringelement 5 und Gegenstück 21 so stark zueinander gezogen, daß die zwischen Ringelement 5 und Gegenstück 21 liegende Ausbuchtung 11 deformiert wird. Diese Deformation ist dabei so stark, daß sich die beiden, sich radial erstreckenden Wände der Ausbuchtung 11 in dem der Balgachse zugewandten Bereich der Ausbuchtung 11 gegenseitig berühren.

Eine weitere Möglichkeit besteht darin, die letzte Ausbuchtung 11 des Metallbalgs bereits während der Balgherstellung so zu deformieren, daß sich die im wesentlichen radial verlaufenden Wände in dem der Balgachse zugewandten Bereich gegenseitig berühren.

Um zu vermeiden, daß die Ausbuchtung 11 in ihrem der Balgachse abgewandten Ende durch die genannte Deformation bricht, ist das Gegenstück 21 mit einer Phase 22 versehen, die bewirkt, daß in dem genannten Bereich der Ausbuchtung 11 keine Klemmung zwischen Ringelement 5 und Gegenstück 21 auftritt.

Durch die Deformation der Ausbuchtung 11 wird eine unerwünschte Federwirkung zwischen Ringelement 5 und Gegenstück 21 vermieden.

Fig. 4 zeigt eine weitere Variante der Erfindung, wobei auch hier Elemente, die ihre Entsprechung in den Fig. 2 bzw. 3 finden, mit denselben Bezugszeichen bezeichnet sind.

Auch der Metallbalg gemäß Fig. 4 wird in der gleichen Weise hergestellt wie die Metallbälge gemäß den Fig. 2 und 3. Ein Unterschied besteht lediglich darin, daß nach Herstellung des Metallbalgs die jeweils letzte Ausbuchtung in Richtung eines stirnseitigen Balgendes im Bereich ihres größten Durchmessers abgeschnitten wird.

Ringelemente 4, 5 und Gegenstücke 16, 21, 23 können auch beliebig anders als in Fig. 2 bis 4 dargestellt ausgestaltet werden. Beispielsweise können sie als Flansch, Stützring für Überwurfmuttern, Ring mit Außengewinde oder dergleichen ausgebildet sein. Dementsprechend kann auch die Verbindung von Ringelement 5 und Gegenstück 16, 21, 23 auf andere Weise als mittels der Klammer 19 erfolgen. Insbesondere sind auch Schraubverbindungen möglich.

Die Erzeugung des Metallbalgs kann derart erfolgen, daß die Ringelemente 4, 5 nach der Deformation des Rohlings 1 mit ihren radial innen liegenden Flächen formschlüssig, insbesondere klemmend in den ringförmigen Einbuchtungen 12, 13 anliegen. Alternativ oder zusätzlich ist es jedoch auch möglich, daß die Ringelemente 4, 5 mit ihren Stirnflächen an den beiden, den Ringelementen 4, 5 benachbarten Ausbuchtungen 8, 9 bzw. 10, 11 anliegen, insbesondere zwischen diesen Ausbuchtungen eingeklemmt sind.

Schließlich ist es auch möglich, die Balgherstellung derart zu gestalten, daß die Ringelemente 4, 5 nach der Deformation des Rohlings 1 im Bereich der ringförmigen Einbuchtungen 12, 13 bezogen auf die Längsachse des Balgs axial verschiebbar und/oder drehbar sind.

## Patentansprüche

1. Verfahren zur Herstellung eines zur Verbindung mit einem Gegenstück (16, 21, 23) geeigneten Metallbalgs, bei dem ein rohrförmiger Rohling (1) durch Kraftbeaufschlagung zu einem Balg mit mehreren alternierend aufeinanderfolgenden ringförmigen Aus- und Einbuchtungen (6, 7) deformiert wird,
**dadurch gekennzeichnet,**
daß zumindest ein zur Verbindung mit dem Gegenstück (16, 21, 23) dienendes Ringelement (4, 5) relativ zum Rohling (1) derart angeordnet wird, daß es diesen umgibt, und
daß anschließend die Deformation des Rohlings (1) zum Balg derart erfolgt, daß das Ringelement (4, 5) in einer ringförmigen Einbuchtung (12, 13) zwischen zwei benachbarten Ausbuchtungen (8, 9; 10, 11) zu liegen kommt.

2. Verfahren nach Anspruch 1,
**dadurch gekennzeichnet,**
daß die Deformation innerhalb einer Form erfolgt, wobei im Inneren des Rohlings (1) radial nach außen gerichtete Druckkräfte erzeugt werden, denen zumindest im Bereich der Einbuchtungen (7) des zu erzeugenden Balgs radial nach innen gerichtete, durch die Form bewirkte Stützkräfte entgegenwirken, wobei insbesondere das Ringelement (4, 5) während der Deformation ebenfalls radial nach innen gerichtete Stützkräfte bedingt und/oder das Ringelement (4, 5) vor der Deformation in die Form eingelegt und der Rohling (1) anschließend durch das Ringelement (4, 5) geschoben und auf diese Weise in die Form eingelegt wird, oder
daß das Ringelement (4, 5) vor der Deformation auf den Rohling (1) geschoben anschließend gemeinsam mit dem Rohling (1) in die Form eingelegt wird.

3. Verfahren nach einem der vorhergehenden Ansprüche,
**dadurch gekennzeichnet,**
daß die einem stirnseitigen Balgende (2, 3) zugewandte und an das Ringelement (4, 5) angrenzende Ausbuchtung (8, 11) die letzte Ausbuchtung des Balgs in Richtung des stirnseitigen Balgendes (3, 2) ist und das stirnseitige Balgende (3, 2) durch einen Bereich einer Einbuchtung (14, 15) und/oder durch einen zylindrischen Balgabschluß gebildet ist, wobei insbesondere die in Richtung des stirnseitigen Balgendes (2, 3) gelegene letzte Ausbuchtung (8, 11) zwischen dem Ringelement (4, 5) und dem Gegenstück (16, 21, 23) aufnehmbar ist.

4. Verfahren nach Anspruch 5,
**dadurch gekennzeichnet,**
daß nach Herstellung des Balgs die zwischen dem Ringelement (4, 5) und dem Gegenstück (16, 21, 23) aufnehmbare Ausbuchtung (8, 11) bei Verbindung von Ringelement (4, 5) und Gegenstück (16, 21, 23) in Axialrichtung des Balgs deformierbar und zwischen Ringelement (4, 5) und Gegenstück (16, 21, 23) klemmbar ist, oder daß während Herstellung des Balgs die zwischen dem Ringelement (4, 5) und dem Gegenstück (16, 21, 23) aufnehmbare Ausbuchtung (8, 11) insbesondere durch bewegliche Elemente der Form in Axialrichtung des Balgs deformiert, vorzugsweise zusammengedrückt wird.

5. Verfahren nach Anspruch 4,
**dadurch gekennzeichnet,**
daß die Deformation hauptsächlich in dem der Balgachse zugewandten Bereich der Ausbuchtung (8, 11) erfolgt, wobei insbesondere die Deformation derart erfolgt, daß sich die beiden, sich im wesentlichen radial erstreckenden Wände der Ausbuchtung (8, 11) in dem der Balgachse zugewandten Bereich der Ausbuchtung (8, 11) berühren.

6. Verfahren nach den Ansprüchen 1 bis 3,
**dadurch gekennzeichnet,**
daß der Balg nach der Ausformung der Ein- und Ausbuchtungen (6, 7) im Bereich seiner in Richtung des stirnseitigen Balgendes (2, 3) gelegenen letzten Ausbuchtung (8, 11) abgeschnitten wird.

7. Verfahren nach einem der vorhergehenden Ansprüche,
**dadurch gekennzeichnet,**
daß Ringelement (4, 5) und Form derart bemessen sind, daß das Ringelement (4, 5) nach der Deformation des Rohlings (1) mit seiner radial innen liegenden Fläche formschlüssig, insbesondere klemmend, an der ringförmigen Einbuchtung (12, 13) anliegt, und/oder daß Ringelement (4, 5) und Form derart bemessen sind, daß das Ringelement (4,5) nach der Deformation des Rohlings (1) mit seinen Stirnflächen an den beiden, dem Ringelement (4, 5) benachbarten Ausbuchtungen (8, 9; 10, 11) anliegt, insbesondere zwischen den beiden Ausbuchtungen (8, 9; 10, 11) eingeklemmt ist.

8. Verfahren nach einem der vorhergehenden Ansprüche,
**dadurch gekennzeichnet,**
daß Ringelement (4, 5) und Form derart bemessen sind, daß das Ringelement (4, 5) nach der Deformation des Rohlings (1) im Bereich der ringförmigen Einbuchtung (12, 13) bezogen auf die Längsachse des Balgs axial verschiebbar und/oder drehbar ist, und/oder daß zwei Ringelemente (4, 5) relativ zum Rohling (1) derart angeordnet werden, daß sie diesen insbesondere in seinen beiden einander gegenüberliegenden Endbereichen umgeben.

9. Metallbalg, hergestellt nach einem Verfahren gemäß einem der vorhergehenden Ansprüche.

10. Metallbalg nach Anspruch 9,
**dadurch gekennzeichnet,**
daß das Ringelement bzw. die Ringelemente (4, 5) und/oder das Gegenstück bzw. die Gegenstücke (16, 21, 23) ein ebenfalls ringförmiges Dichtungsmittel (20) aufweisen, und/oder daß das Ringelement bzw. die Ringelemente (4, 5) als Flansch, Stützring für Überwurfmuttern, Ring mit Außengewinde oder dgl. ausgebildet sind.
